(19) **Europäisches Patentamt**

**European Patent Office**

**Office européen des brevets**

(11) **EP 0 759 541 B1**

(12) **EUROPEAN PATENT SPECIFICATION**

(45) Date of publication and mention
of the grant of the patent:
**28.12.2005 Bulletin 2005/52**

(51) Int Cl.$^7$: **G01F 1/84**

(21) Application number: **95113132.5**

(22) Date of filing: **21.08.1995**

(54) **Mass flowmeter converter**

Massendurchflussmesswandler

Convertisseur pour un débitmètre massique

(84) Designated Contracting States:
**CH DE ES FR GB IT LI NL**

(43) Date of publication of application:
**26.02.1997 Bulletin 1997/09**

(73) Proprietor: **OVAL CORPORATION
Tokyo 161-8508 (JP)**

(72) Inventors:
• **Kitami, Hirokazu
Shinjuku-ku, Tokyo (JP)**

• **Abe, Toshihiro
Shinjuku-ku, Tokyo (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 261 435          EP-A- 0 275 367
EP-A- 0 375 300          EP-A- 0 598 287
WO-A-88/03642          WO-A-92/19940**

**Description**

BACKGROUND OF THE INVENTION

The present invention relates to a mass flowmeter converter and, more particularly, to a converter which is adapted for use in a low detection sensitivity mass flowmeter such as a straight tube type Coriolis flowmeter, and which can measure a Coriolis force acting on a flow tube of a Coriolis flowmeter, which is proportional to mass flowrate, as a time difference at high sensitivity with no transit-time change due to a drift of an operational circuit.

A Coriolis flowmeter is a well known mass flowmeter which is based upon the fact that when fluid flows in a flow tube supported at both ends on supporting members and said tube is driven with an alternate oscillation at its center portion in the direction perpendicular to its axis, a phase difference is produced between two symmetrically opposite positions on the flow tube and said phase difference is proportional to a mass flow rate. In practice, a driving coil to be excited by a drive circuit is provided in the center of a flow tube supported at both ends on supporting means and two detecting coils are arranged at symmetrically opposite positions between the center portion and both ends of the flow tube. A signal of a phase difference proportional to a mass flow rate, which is produced by the action of a Coriolis force, is detected and a mass flow is determined from the phase difference value. If a driving oscillation frequency is supposed to be constant, a phase difference signal can be detected as a time difference signal obtained when the flow tube passes a standard line at symmetrical positions.

Document EP 0275367A discloses a sensor structure for use in a Coriolis mass flow meter to determine the relative mass flow of a fluid. The sensor structure utilizes photo-optic type signal processing and interfaces the signal with a processor such that the signal is continuously calibrated to eliminate minor errors. The electronic interface comprises circuitry for determining the instantaneous amplitude difference between the signals from the sensors of the flow meter at a plurality of discrete and adjacent intervals, circuitry for determining the product of the absolute value of the instantaneous amplitude difference and the width of the interval for each interval, circuitry for determining the sum of the product for each interval over a cycle of oscillation, and circuitry for generating from the sum a signal representative of the mass flow.

Document WO 88/03642A discloses a Coriolis mass flow meter including a ferromagnetic drive mechanism and ferromagnetic velocity sensors. The drive mechanism includes a drive coil, a ferromagnetic drive keeper affixed to a flow conduit of the meter, a magnet and means for applying a drive signal to the drive coil. The velocity sensor includes a sensor coil, a ferromagnetic sensor keeper affixed to the flow conduit, a magnet and means for detecting a current induced in the sensor coil by changes in the sensor keeper position. The drive mechanism oscillates the flow conduit in response to the variable magnetic field produced by the drive signal. As a side leg of the flow conduit oscillates, the magnetic field passing through the sensor coil varies and a signal is induced therein which provides a measure of the velocity of the side leg of the flow conduit.

When a flow tube supported at both ends on supporting means is driven with alternate natural oscillation at its center portion in the direction perpendicular to its axis, a constant driving frequency which corresponds to a size and material of the flow tube and a density of the measurable fluid, is obtained at a small driving energy and, therefore, the fluid density corresponding to the driving frequency is determined. For this reason, it is usually adopted to drive the flow tube at its natural oscillation frequency.

A circuit for driving the flow tube at a natural oscillation is a positive feedback circuit that controls an input signal at a constant level by inputting a sine-wave signal output from a detecting coil into a driving circuit.

Accurate measurement of a mass flow by a Coriolis mass flowmeter thus constructed depends upon stable and accurate measurement of a time difference signal. The time difference is measured by counting clock pulses of a specified frequency during the time difference. For instance, in case of a straight tube type Coriolis flowmeter having a high rigidity of its straight tube, a phase difference signal produced by the action of a Coriolis force is small and, therefore, a time difference value of the time difference signal proportional to the phase difference signal is correspondingly small. Such a small time difference may be detected at an accuracy necessary for further measurement in the Coriolis mass flowmeter by using a clock pulse generator of 100 MHz and the like level, which is, however, expensive to use. To stably measure a small value of time difference at a high accuracy, there is still a problem as to a stability of the time difference detecting circuit itself, e.g., the occurrence of a zero drift may reduce a detecting accuracy. Furthermore, the Coriolis flowmeter itself may be affected by an expansion of measurable fluid due to temperature change.

SUMMARY OF THE INVENTION

According to an illustrative embodiment of the present invention, the above-identified problems are solved by a mass flowmeter converter as defined in claim 1.

According to another illustrative embodiment of the present invention, the above-identified problems are solved by a mass flowmeter converter as defined in claim 4.

According to yet another illustrative embodiment of the present invention, the above-identified problems are solved by a mass flowmeter as defined in claim 5.

BRIEF DESCRIPTION OF THE DRAWINGS

Fig. 1 is a block diagram for explaining construction of a conventional mass flowmeter.

Fig. 2 is a view for explaining an example of measuring a time difference by a Coriolis flowmeter.

Fig. 3 is a block diagram of a conventional mass flowmeter converter for determining a time difference ΔT.

Fig. 4 is a circuit diagram for explaining an embodiment of a mass flowmeter converter according to the present invention.

Fig. 5 is a time chart for explaining the mass flowmeter converter shown in Fig. 4.

Fig. 6 is a circuit diagram for explaining another embodiment of a mass flowmeter converter according to the present invention.

Figs. 7A and 7B are output voltage characteristics for explaining the circuit operation of the mass flowmeter converter shown in Fig. 6.

Fig. 8 shows a relationship between a time difference ΔT and a mass flow rate $Q_M$.

Fig. 9 is a circuit diagram for explaining another embodiment of a mass flowmeter converter according to the present invention.

Fig. 10 is a time chart of a pulse train for explaining the operation of the mass flowmeter converter shown in Fig. 11.

Fig. 11 shows a voltage-time characteristic of charge-discharge voltage during a time interval from $t_1$ to $t_2$ and a time interval from $t_2$ to $t_3$ of the time chart shown in Fig. 12.

DESCRIPTION OF THE PREFERRED EMBODIMENTS

In a Coriolis flowmeter which comprises a flow tube secured at both ends on the supports, with a driving means disposed at the center thereof and detecting coils arranged at symmetrically on opposite sides of the driving means on the measuring flow tube, a mass flowmeter converter used therein has a circuit that, when a fluid flowing tube is oscillated at a constant frequency with a specified amplitude, e.g., a natural frequency by driving means, receives a detecting signals from the detecting coils, detects a phase difference signal proportional to a Coriolis force and outputs a mass flow detecting signal.

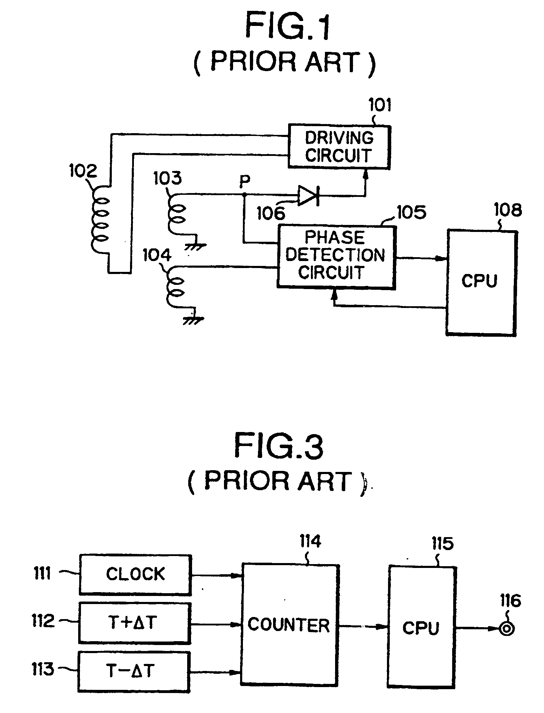

Fig. 1 is a block diagram for explaining a construction of a conventional mass flowmeter converter wherein a driving portion is disposed at the middle portion of the flow tube (not shown) wherein measurable fluid flows and an outer housing (not shown). The driving portion consists of, e.g., a driving coil 102, a core (not shown) receiving a magnetic force from the driving coil 102. Detecting coils 103 and 104 are each composed of a detecting coil and an electromagnet (not shown) and symmetrically arranged between a flow tube and disposed at symmetrical positions on the flow tube between the driving portion and the supporting walls of the outer housing.

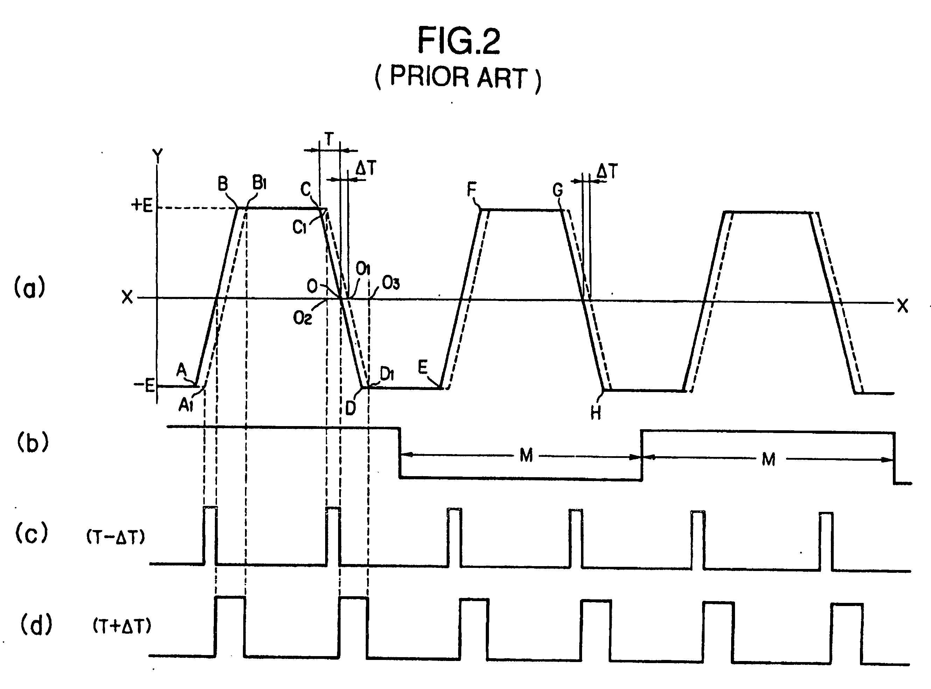

The driving coil 102 is connected to an output end of a drive circuit 101 whose input end is connected to a DC signal which is a sine-wave signal detected by the detecting coil 103 and rectified by a full-wave rectifier circuit. A positive feedback circuit formed by the detecting coil 103, the full-wave rectifier circuit 106, the driving circuit 101 and the driving coil 102 constitute a sine-wave oscillator circuit for generating a natural frequency of the flow tube 102. The detecting coil outputs a detection signal at a point P and transfers it to the full-wave rectifier circuit 106 which in turn convert the received detection signal into a DC voltage. The driving circuit 102 compares the DC voltage value with a reference voltage value and controls the detecting coil to obtain a constant sine-wave signal at the point P. In this case, the sine-wave signals outputted from the detecting coils 103 and 104 are velocity signals which are therefore entered into a phase detection circuit 104 wherein they are integrated and converted into position signals. Consequently, the detected voltage of the detecting coil 104 becomes a constant amplitude sine-wave signal having a phase difference relative to the sine-wave signal of the detecting coil 103, which is proportional to a Coriolis force. The phase difference is converted into a time difference, detected and transferred by the phase detecting circuit 105 to a CPU (central processing unit) which in turn converts the time difference signal into a mass flowrate signal and outputs it. Referring to Fig. 2, the operation of the phase detecting circuit 105 will be described bellow:

Fig. 2 is illustrative of an example of measuring a time difference by a Coriolis flowmeter. In Fig. 2-(a), there is shown a graph showing a trapezoidal-wave signal which is obtained by amplifying and shaping a constant-amplitude sine-wave signal having a phase difference at a constant amplitude and detected at a detecting position on a flow tube, labeling the horizontal axis with time and the vertical axis with voltage. A trapezoid ABCD ... and a trapezoid $A_1B_1C_1D_1$ ... are displacement signals of the flow tube, which are represented by voltages being different in phase and having the same absolute peaks in positive and negative directions (±E) in relation to a time base X-X. These displacement signals are the same continuous trapezoidal waves on the time base. A reference time for specifying a phase difference, for example, is a time T between a peak value C(+E) or D (-E) of an oblique side CD of the trapezoidal wave ABCD and a point O at which said side intersects the time base. In case of the displacement signals of trapezoids ABCD and $A_1B_1C_1D_1$, which are different in phase each other, phase-difference signals as to oblique sides CD and $C_1D_1$ will be described below:

A square $CC_1DD_1$ is a parallelogram and a time difference $\Delta T$ between parallel sides CD and $C_1D_1$ is a phase difference signal. Sides $CC_1$ and $DD_1$ have a length equal to a length of a time base segment $OO_1$. When points projected from points $C_1$ and $D_1$ onto the time base are expressed by $O_2$ and $O_3$ respectively, a side $O_2O$ indicates a time (T-$\Delta T$) and a side $OO_3$ indicates (T+$\Delta T$).

The time (T-$\Delta T$) is expressed by a pulse of Fig. 2-(c) and the time (T+$\Delta T$) is expressed by a pulse of Fig. 2-(d). The CPU 108 determines a time difference $\Delta T$ as follows: For a duration 2M being twice the pulse time width M corresponding to one period of a trapezoidal wave shown in Fig. 2-(b), an addend of each pulse width is subtracted to get an average value, for example:

$$\{ 4(T+AT) - 4(T-\Delta T) \} / 8 = \Delta T \tag{1}$$

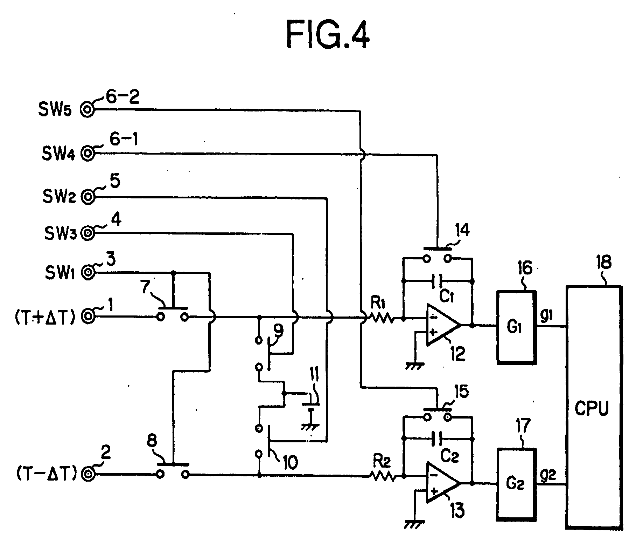

Fig. 3 is a block diagram of a conventional mass flowmeter converter for determining a time difference $\Delta T$, wherein a counter 114 measures pulse duration values of pulses (T+$\Delta T$) and (T-$\Delta T$) as numbers of counts of clock pulses generated from a clock pulse generator 111 and the CPU 115 calculates therefrom a digital value proportional to a mass flow and has an output at a terminal 116.

In the conventional mass flowmeter converter of Fig. 3, a time proportional to a phase difference of the measuring tube is measured as digital value of clock pulse counts. To ensure a high accuracy of mass flow measurement it is necessary to measure a time difference with a sufficient resolution, i.e., to get enough clock pulse counts proportional to a time difference for all range of flow measurements. In a Coriolis flowmeter having an axially symmetrical curved flow tube, wherein a Coriolis force is produced about a symmetrical axis when the curved measuring tube is driven with an alternating oscillation in a direction perpendicular to the symmetry axis, it is possible to measure a time difference at a sufficiently high sensitivity by increasing a moment about a symmetry axis and, therefore, to determine a time difference by counting clock pulses. In a straight tube type Coriolis flowmeter having a measuring tube of high flexural rigidity and, therefore, a large natural frequency, a time difference signal produced by the action of a Coriolis force is very small and therefore it shall be measured by using a clock pulse oscillator that is capable of generating a high oscillation frequency of, e.g., 100 MHz. Clock pulse oscillators which are nowadays available have not sufficient reliability and stability. In practice, it is rather difficult to get a high accuracy clock oscillator at an inexpensive cost.

Fig. 4 is a circuit block diagram of a mass flowmeter converter (embodiment 1) according to the present invention. In the circuit of the mass flowmeter converter of Fig. 4, a negative leading pulse (T+$\Delta T$) which has a pulse width of a time (T+$\Delta T$) and a constant voltage value (-E) (referred hereinafter to as (T+$\Delta T$) pulse) enters into an input terminal 1 which is connected to a contact 7 to be turned ON and OFF by a switch $SW_1$, a charging/discharging circuit composed of an input resistance $R_1$ and a feedback capacitor $C_1$ and then a an integrator composed of an operational amplifier 12. A negative lagging pulse (T-$\Delta T$) which has a pulse width of a time (T-$\Delta T$) and a constant voltage value (-E) (referred hereinafter to as (T-$\Delta T$) pulse) synchronously with the (T+$\Delta T$) pulse enters an input terminal 2 which is connected to a contact 8 to be turned ON and OFF by the switch $SW_1$, a charge-discharge circuit composed of an input resistance $R_2$ and a feedback capacitor $C_2$ and then a an integrator composed of an operational amplifier 13.

Feedback capacitors $C_1$ and $C_2$ of the operational amplifiers 12 and 13 is provided with contacts 14 and 15 parallel connected respectively thereto and drivable by switches $SW_4$ and $SW_5$ respectively. The switches $SW_4$ and $SW_5$ turn ON just before charging operation to discharge the capacitors $C_1$ and $C_2$. The operational amplifier circuits 12 and 13 are provided with zero-crossing detector circuits 16 and 17 respectively, by which zero-crossing signals are detected and transferred into the CPU 18. The resistance values and capacitance values are selected to be equal to each other, i.e., $R_1 = R_2$ and $C_1 = C_2$. On the other hand, a contact 9 drivable by a switch $SW_2$ is connected in series between the contact 7 and the resistance $R_1$ and a contact 10 drivable by a switch $SW_3$ is connected in series between the contact 8 and the resistance $R_2$. A reference voltage source 11 for generating a positive reference voltage Es is connected between the contacts 9 and 10.

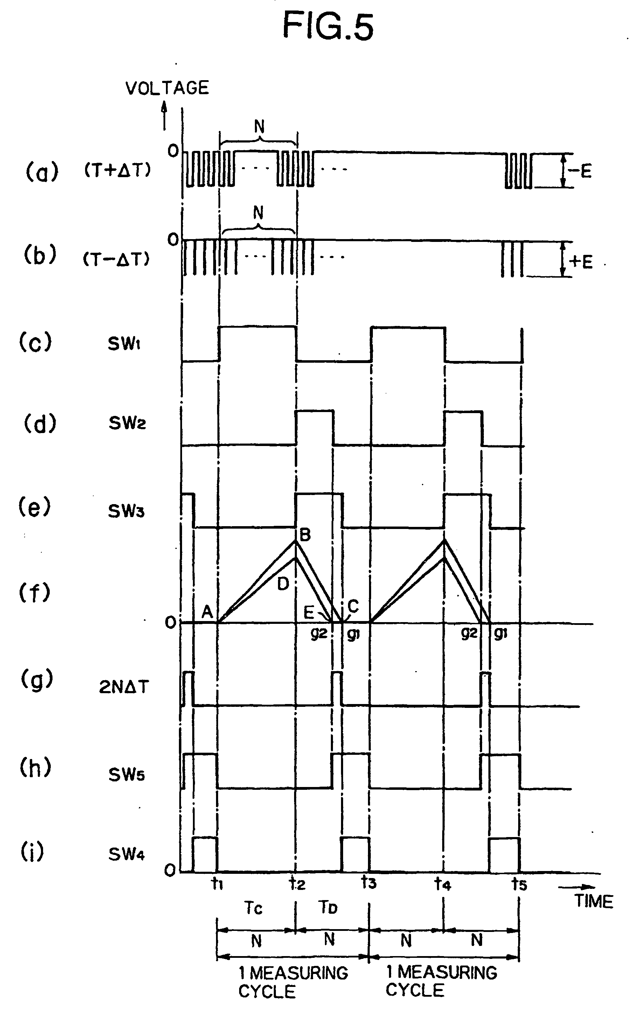

The operation of the above-mentioned mass flowmeter converter will be described below with reference to Fig. 5.

Fig. 5 is a time chart for explaining the mass flowmeter converter shown in Fig. 4. For this instance, a measurement starts at a moment $t_1$ in the time chart. The switches $SW_4$ and $SW_5$ are first operated to turn ON the contacts 14 and 15 (Fig. 5-(i) and (h)), whereby the feedback capacitors $C_1$ and $C_2$ are discharged. After this, a high level signal of the switch $SW_1$ (Fig. 5-(c)) simultaneously close the contacts 7 and 8 for a period from $t_1$ to $t_2$ in which N pieces of

pulses $(T+\Delta T)$ (Fig. 5-(a)) enter a resistance $R_1$ and, at the same time, N pieces of pulses $(T-\Delta T)$ (Fig. 5-(b)) enter the resistance $R_2$. For this period, the switches $SW_2$ and $SW_3$ have a low level signal (Fig. 5-(d) and (e)) to keep OFF the contacts 9 and 10.

Consequently, The $R_1$-$C_1$ integrator receives an input of N pulses $(T+\Delta T)$ and has an output voltage that increases along the line AB (Fig. 5-(f)) in proportion to the number of input pulses input. At the same time, the $R_2$-$C_2$ integrator receives an input of N pulses $(T-\Delta T)$ and has an output voltage that increases along the line AD (Fig. 5-(f)) in proportion to the number of input pulses input. The pulse $(T+\Delta T)$ is apparently larger in width than the pulse $(T-\Delta T)$ and, therefore, a voltage at point B is larger than a voltage at point D. Next, in the period of $t_2$ to $t_3$, a low-level signal of the switch $SW_1$ (Fig. 5-(c)) causes the contacts open, the OFF signals make switches SWz and $SW_3$ generates high-level output signals (Fig. 5-(d), (e)) by which the contacts 9 and 10 are closed to apply a positive reference voltage $E_3$ of the reference voltage source 11 to the $R_1$-$C_1$ integrator and the $R_2$-$C_2$ integrator. The charge accumulated for the period of $t_1$ to $t_2$ are discharged. As paired resistances $R_1$ and $R_2$ are the same $(R_1 = R_2)$ and the paired capacitors are the same $(C_1 = C_2)$, the $R_1$-$C_1$ integrator and the $R_2$-$C_2$ integrator are discharged according to the line BC and the line DE respectively (Fig. 5-(f)) and respective discharging lines meet at respective zero-crossing points (time positions E and C) on a zero voltage line. The time constants $R_1C_1$ and $R_2C_2$ are equal to each other $(R_1C_1 = R_2C_2)$ and the discharging is conducted by the negative reference voltage Es of the reference voltage source 13, lines BC and DE are parallel to each other and lines BD and EC are proportional to each other. The line EC represents the time base. The zero-crossing point C is detected by the zero-crossing detector 16 as a zero-crossing time signal $g_1$ while the zero-crossing point E is detected by the zero-crossing detector 17 as a zero-crossing time signal $g_2$. The detector 16 outputs a pulse having a pulse width of $g_1$ and the detector 17 outputs a pulse having a pulse width of $g_2$ (Fig. 5-(g)). A period between the time signals $g_1$ and $g_2$ is a time-difference signal of 2N times the time difference $\Delta T$ which is expressed as follows:

$$N(T+\Delta T) - N(T-\Delta T) = 2N\Delta T \qquad (2)$$

The zero-crossing time signals $g_1$ and $g_2$ are inputted into the CPU 18 by which they are converted into digital clock signals which is further processed to form a signal of 2N times the time difference $\Delta T$ proportional to the measured mass flow wand then outputted.

The operations of switches $SW_2$, $SW_3$, $SW_4$ and $SW_5$ are as follows:

The high level signal (Fig. 5-(d)) of the switch $SW_2$, by the action of which the contact 10 is closed at a time $t_2$, is switched by a zero-crossing signal $g_2$ of the discharging line DE (Fig. 5-(g)) to a low-level signal at a time $g_2$. At the same time, the zero-crossing signal $g_2$ causes the switch $SW_5$ to ra.ise a high level signal (Fig. 5-(h)) and close the contact 15 to discharge the charge of the capacitor $C_2$ of the $(T-\Delta T)$ pulse side integrator. The high level signal of the switch $SW_5$ is trailed to the low level signal by a high level signal of the switch $SW_1$ defining a time $t_3$ at which a succeeding measuring cycle starts (Fig. 5-(h)). Similarly, the high level signal (Fig. 5-(e)) of the switch $SW_3$, by which the contact 9 is closed at a time $t_2$, is switched by a zero-crossing signal $g_1$ of the discharging line BC (Fig. 5-(g)) to a low-level signal. At the same time, the zero-crossing signal $g_1$, causes the switch $SW_4$ to raise a high level signal (Fig. 5-(i)) and close the contact 14 to discharge the charge of the capacitor $C_1$ of the $(T+\Delta T)$ pulse side integrator. The high level signal of the switch $SW_4$ is trailed to the low level signal (Fig. 5-(i)) by a high level signal of the switch $SW_1$ defining a time $t_3$ at which the succeeding following measuring cycle starts (Fig. 5-(c)).

As shown in Fig. 5, the period from $t_1$ to $t_2$ is a charging period Tc for simultaneously charging with N pulses $(T+\Delta T)$ and N pulses $(T-\Delta T)$. The period between $t_2$ and $t_3$ is a preparation period To in which the charges are simultaneously discharged, the zero-crossing time g1 of the $(T+\Delta T)$ pulses and the zero-crossing time $g_2$ of the $(T-\Delta T)$ pulses are determined, the time difference of $2N\Delta T$ is measured, the integrating capacitors $C_1$ and $C_2$ are discharged for a period between $g_2$ and $t_3$ of preparation for a succeeding cycle. Accordingly, one measuring cycle is a period between $t_1$ and $t_3$ starting from charging with N pulses $(T+\Delta T)$ and N pulses $(T-\Delta T)$ and ending at discharging the integrating capacitors $C_1$ and $C_2$ for preparation for succeeding measuring cycle. The measuring cycle is then repeated.

In a mass flowmeter converter including an embodiment 1 shown in Fig. 4, time constants $R_1C_1 = R_2C_2$ are selected, but resistance R and capacitance C may be influenced by temperature and may vary for the long operation period. Consequently, the time constant may change, bringing an error into the time difference measurement. Another embodiment 2 of the present invention relates to a detecting circuit for detecting a deviation of a time difference, which occurs due to a change of the time constants $R_1C_1$ and $R_2C_2$. This embodiment is intended to realize a correction of a measured mass flow for a detected deviation of the time difference.

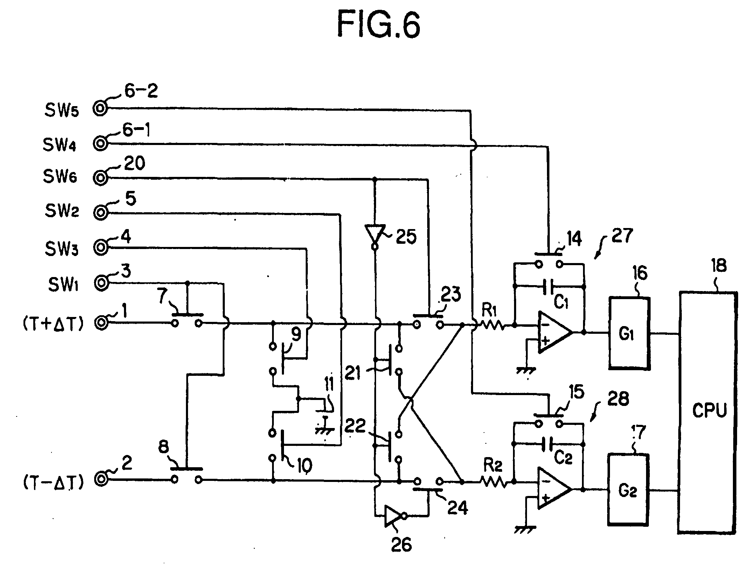

Fig. 6 is a circuit diagram of another mass flowmeter converter embodying the present invention. In the circuit of Fig. 4, a contact 23 is connected between a contact 7 and a resistance $R_1$ of a line whereto $(T+\Delta T)$ pulses are applied. A contact 24 is connected between a contact 8 and a resistance $R_2$ of a line whereto $(T-\Delta T)$ pulses are applied. The contacts 23 and 24 are driven by a high-level signal of a switch SW6 connected with an input terminal 20. Furthermore, an inverter 25 is connected with the input terminal 20 and contacts 21 and 22 are closed by a low-level signal of the switch SWe. An inverter 26 is connected with the inverter 25 and the contact 24 is substantially driven by a high-level signal of the switch $SW_6$.

The contact 21 is connected at one side between the contact 23 and 7 whereto (T+$\Delta$T) pulses are supplied and connected at the other side between the contact 24 and the resistance $R_2$ in the line whereto (T-$\Delta$T) pulses are applied. Similarly, the contacts 22 is connected at one side between the contact 24 and 8 whereto (T-$\Delta$T) pulses are supplied and connected at the other side between the contact 23 and the resistance $R_1$ in the line whereto (T+$\Delta$T) pulses are applied.

In the circuit shown in Fig. 6, the contacts 23 and 24 are closed by a high-level signal of the switch $SW_e$ for a period of measuring a time difference (mass flow). Similarly with the mass flowmeter converter circuit of Fig.4, a time difference between $g_2$ and $g_1$ (Fig. 5-(g)) which is proportional to a mass flow is detected.

However, in testing whether the time constants $R_1C_1$ and $R_2C_2$ changed with the aged deterioration, contacts 23 and 24 are opened by the low-level signal of the switch 6 and, at the same time, the contacts 21 and 22 are closed, thereby N pulses (T+$\Delta$T) applied to the input terminal 1 are transferred into the integrator of the time constant $R_2C_2$ and N pulses (T-$\Delta$T) applied to the input terminal 2 are transferred into the integrator of the time constant $R_1C_1$. A time difference signal in mass flow measurement and a time difference signal in testing are compared with each other.

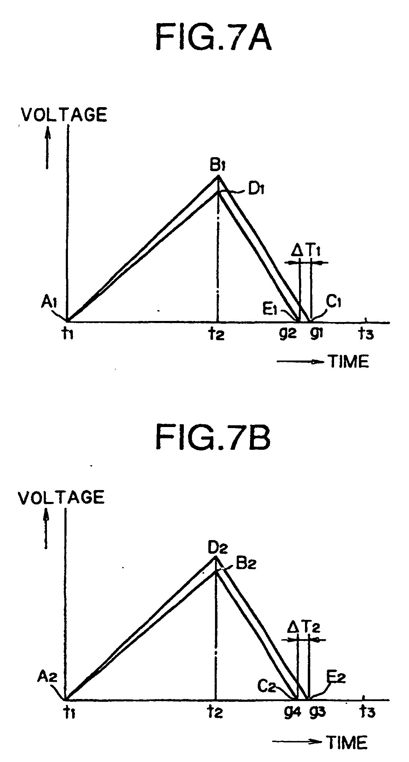

Figs. 7A and 7B are output voltage characteristics for explaining the operation of the mass flowmeter converter circuit shown in Fig. 6. Fig. 7A indicates the time-difference output-voltage characteristic of the converter circuit in usual mass flow measurement and Fig. 7B indicates the time-difference output-voltage characteristic of the converter circuit in testing.

In Fig. 7A showing a time-difference signal obtained in usual mass-flow measurement, N pulses (T+$\Delta$T) applied to an input terminal 1 are inputted from the beginning of the period $t_1$ into the integrator having a time constant $R_1C_1$, which is charged till the time $t_2$ in proportion to the number N of input pulses according to the line $A_1B_1$. At the same time, N pulses (T-$\Delta$T) applied to an input terminal 2 are inputted in the same period into the integrator having a time constant $R_2C_2$, which is charged till the time $t_2$ according to the line $A_1D_1$. Switches $SW_1$, $SW_2$ and $SW_3$ operate to cause the integrators to be discharged by means of a reference voltage source 11 according to respective lines $B_1C_1$, $D_1E_1$, and a measurement time difference is determined according to the following expression: $E_1 \times C_1 = 2N \times \Delta T = \Delta T_1$

Referring to Fig. 7B, a time difference signal $\Delta T_2$ is obtained in testing in the following manner:

N pulses (T+$\Delta$T) through an input terminal 1 are inputted into the integrator having a time constant $R_2C_2$ which outputs a charging voltage according a line $A_2$-$D_2$ and, at the same time, N pulses (T-$\Delta$T) through an input terminal 2 are inputted into the integrator having a time constant $R_1C_1$ which outputs a charging voltage according to a line $A_2B_2$.

In succeeding period between $t_2$ and $g_3$, the integrators are discharged by the reference voltage source 11 according to the respective lines $D_2E_2$ and $B_2C$ and a measurement time difference $E_3 \times C_2 = 2N \times \Delta T = \Delta T_2$ is determined.

In case the time constant $R_1C_1$ is equal to the time constant $R_2C_2$, it is judged that there is no aged deviation of both time constants $R_1C_1$ and $R_2C_2$ if the measured time differences $\Delta T_1 = \Delta T_2$. When the time constants $R_1C_1$-$R_2C_2$ is equal to $\Delta T\varepsilon$, a measured time error $\Delta T\varepsilon$ is detected as a doubled value expressed as follows:

$$|\Delta T_1 - \Delta T_2| = 2 |\Delta T\varepsilon| \qquad (3)$$

The measured time difference includes a deviation, causing an error in measured flowrate value. The CPU 18 determines this measured time error $\Delta T\varepsilon$ and corrects the measured mass flowrate value for the calculated error value.

As mentioned above, the mass flowmeter converter shown in Fig. 6, which is an embodiment of the present invention, in addition to an effect proposed by the embodiment 1 shown in Fig. 4, can measure, at a specified interval, a possible error of measurements due to a change of essential time constants caused by aged deterioration of elements and/or temperature influence and can correct the measured flowrate value for a detected error, assuring reliable and accurate mass-flow measurements at an increase sensitivity. Although 2N$|\Delta T\varepsilon|$ is a very small value and may considerably vary depending on the surrounding conditions of the mass flowmeter converter, a much complicated technique must be used to univocally determine a correcting cycle and execute it at a specified interval. The present invention is directed to provide a simplified method for univocally determining the error correcting cycle.

To solve the above-mentioned problem, the following embodiment of the present invention is to provide a method for eliminating in time series a drift and aged change of an integrating circuit without using special correcting means in such a way that, using a merit of measuring a time difference $\Delta T$ at a high sensitivity by charging and discharging N pulses (T+$\Delta$T) and N pulses (T-$\Delta$T), a measurement error $\Delta T\varepsilon$ of a time difference $\Delta T$, which appears as

2N times enlarged value, is corrected between a measuring cycle and next measuring cycle and such correction is repeated in time series. In the mass flowmeter shown in Fig. 6, a first integrating circuit 27 with an input of N pulses $(T+\Delta T)$ and a second integrating circuit 28 with an input of N pulses $(T-\Delta T)$ are charged at the same time with respective charging voltages and then discharged at the same time by a reference voltage, thereby zero-crossing signals are obtained. The zero-crossing signals include a time measurement error for each measuring cycle. In the next measuring cycle, N pulses $(T+\Delta T)$ are inputted into the second integrating circuit 28 and N pulses $(T-\Delta T)$ are inputted into the first integrating circuit 27. The time differences obtained by two successive measuring cycles are added to each other to obtain a time difference signal $2N(\Delta T)$ wherein no error is included. This method is described below.

$N(T+\Delta T)$ and $N(T-\Delta T)$ in the equation (1) are time signals containing a drift (including an aged change) of the first integrating circuit 27 and the second integrating circuit 28 respectively.

$$N(T+\Delta T) = ta_2 + to_2 \tag{4}$$

$$N(T-\Delta T) = ta_1 + to_1 \tag{5}$$

where $ta_1$ and $ta_2$ are an accurate time corresponding to a mass flow, and $to_1$ and $to_2$ are a time corresponding to a drift.

Therefore, the equation (2) is converted to:

$$N\{(T+\Delta T) - (T-\Delta T)\} = (ta_2 + to_2) - (ta_1 + to_1) = (ta_2 - ta_1) + (to_2 - to_1) \tag{6}$$

Supposing that $(to_2 - to_1) = 0$, the equation (6) can be simplified as follows:

$$\Delta T = (ta_2 - ta_1) / 2N \tag{6'}$$

To attain $(to_2 - to_1) = 0$, a first measuring cycle in the equation (5) applies N pulses $(T+\Delta T)$ to the first integrating circuit 27 and N pulses $(T-\Delta T)$ to the second integrating circuit 28 and determines $2N(\Delta T)$. Next measuring cycle applies N pulses $(T+\Delta T)$ to the second integrating circuit 28 and N pulses $(T-\Delta T)$ to the first integrating circuit 27 and determines $2N(\Delta T)$. Two time difference values obtained by the first measuring cycle and the second measuring cycles are combined as be in the equation (5):

$$N\{(T+\Delta T) - (T-\Delta T)\}$$

$$= (ta_2 + to_1) - (ta_1 + to_2)$$

$$= (ta_2 - ta_1) + (to_1 + to_2) \tag{7}$$

Accordingly, the equations (6) and (7) is added to each other as follows:

$$4N\Delta T = (ta_2 - ta_1) + (to_2 - to_1) + (ta_2 - ta_1)$$

$$+ (to_1 - to_2) = 2(ta_2 - ta_1)$$

$$\Delta T = (ta_2 - ta_1) / 2N \tag{8}$$

Equation (8) is the same as the equation (6'). Accordingly, this method can determine a time difference $\Delta T$ accurately proportional to a mass flow, without the influence of a drift. N pulses $(T+\Delta T)$ are measured by the first integrating circuit 27 and N pulses $(T-\Delta T)$ are measured by the second integrating circuit 28 in the first measuring cycle and N pulses $(T+\Delta T)$ are measured by the second integrating circuit 28 and N pulses $(T-\Delta T)$ are measured by the first integrating circuit 27 in the second measuring cycle. Then, the successive measuring cycles are conducted, alternating the integrating circuits as above described. The drift values of the first and second integrating circuits 27 and 28 can be thus compensated by each other.

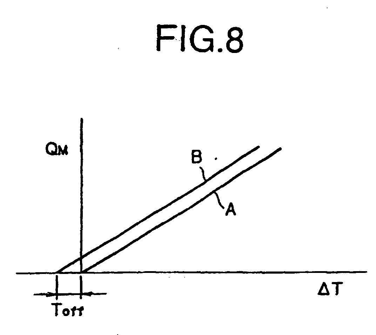

The pulses (T+$\Delta$T) and (T-$\Delta$T) inputted into the mass flowmeter converter shown in Figs. 4 and 6 are voltage pulses having a constant crest value and the same positive and negative voltage values. N pulses (T+$\Delta$T) and N pulses (T-$\Delta$T) are inputted simultaneously into the respective integrating circuits and then discharged simultaneously by using a reference voltage source to measure a 2N-fold zero-cross time-difference value (2N$\Delta$T), eliminating a time error ($\Delta$T$\varepsilon$) caused in the respective integrating circuits. The obtained time-difference value 2N$\Delta$T, however, includes another error of time measurement. For instance, as shown in Fig. 8, a time difference $\Delta$T must be equal to 0 at a zero flow when a flow measurement cycle starts. But, a value $\Delta$T may not be equal 0 because the detecting coils 103 and 104 may have different detection gains to leave an offset time $T_{off}$. Therefore, it is needed to conduct the zero point adjustment of the flowmeter converter before starting the flow measurement. After zero point adjustment, however, zero drift may occur as any state variable changes with time elapsed, resulting in a measurement error.

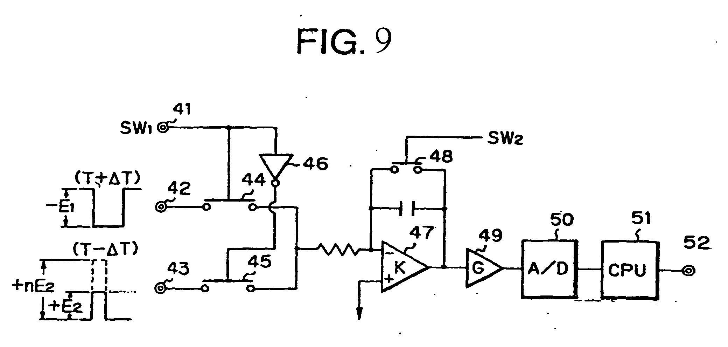

Fig. 9 is a block circuit diagram of another mass flowmeter converter embodying the present invention. For example, pulses (T+$\Delta$T) having a crest value (-$E_1$) are applied to a terminal 42 and pulses (T-$\Delta$T) having a crest value (+$E_2$) are applied to a terminal 43. The terminal 42 has a serially connected contact 44 and the terminal 43 has a serially connected contact 45. The pulses are inputted through the terminals 42 and 43 into an integrator which is composed of an integrating constant RC (an input resistance R and capacitor C) and an operational amplifier circuit 47. A specified positive reference voltage (not shown) is applied to the positive input terminal of the operational amplifier circuit 47. A contact 48 to be closed and opened by a switch $SW_2$ is connected in parallel to the feedback capacitor C.

The operational amplifier circuit 47 is connected with a voltage holding circuit 49 whereto an A/D-converter circuit 50 and a CPU 51 are connected.

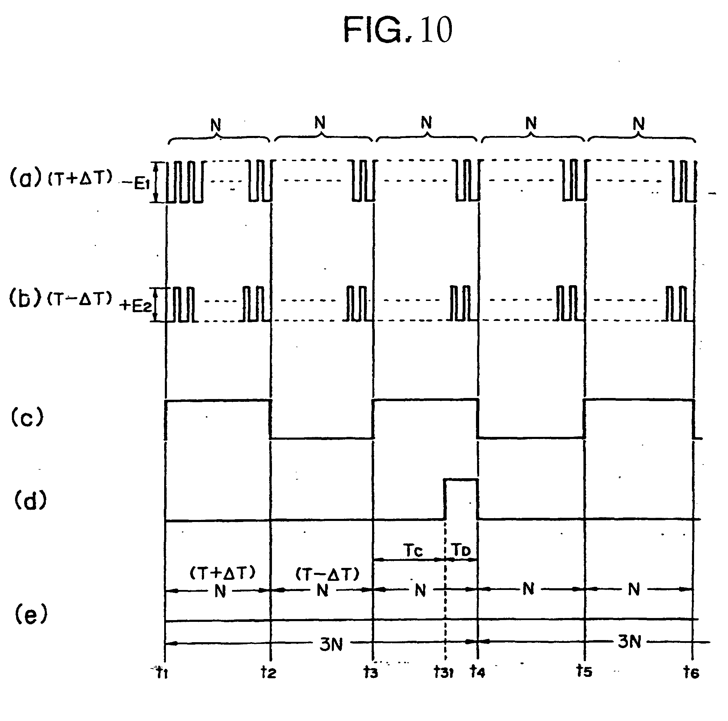

Fig. 10 illustrates a pulse-train time chart for explaining the operation of the mass-flowmeter converter shown in Fig. 9. Fig. 10-(a) shows a train of pulses (T+$\Delta$T) having a crest value (-$E_1$), Fig. 10-(b) shows a train of pulses (T-$\Delta$T) having a crest value (+$E_2$), Fig. 10-(c) shows voltage signals of the gate circuit driving switch $SW_1$, Fig. 10-(d) shows a pulse signal of the switch $SW_2$ and Fig. 10-(e) is a chart showing a measuring cycle.

When the gate driving voltage applied to the switch $SW_1$ is a high-level signal, it makes the contact 44 be closed (ON) and the contact 45 be opened (OFF). On the contrary, when the gate driving voltage applied to the switch $SW_1$ is a low-level signal, it makes the contact 44 be opened (OFF) and the contact 45 be closed (ON) through an inverter 46. Pulse width of the gate driving voltage of the switch $SW_1$ defines an ON-duration of the gate circuit in which pulses (T+$\Delta$T) or (T-$\Delta$T) are sampled in. The pulse width of the gate driving voltage is set to the time necessary for inputting pulses ((T+$\Delta$T) and (T-$\Delta$T) each by N pieces (N > 1).

For the high-level period between $t_1$ and $t_2$ of the gate driving voltage signal, the contact 45 is OFF and the contact 44 is ON, allowing voltage pulses (T+$\Delta$T) (-E) through the terminal 42 enter into an integrator consisting of the resistance R, the feedback capacitor C and the operational amplifier circuit 47. The capacitor C is completely discharged through the contact 48 driven by the switch $SW_2$ (Fig. 10-(d)) till the time $t_1$ of inputting the pulses (T+$\Delta$T). Switching operations of the switch $SW_2$ are programmed by the CPU 51. N pulses (T+$\Delta$T) have the same area ((T+$\Delta$T) $\times$ (-E)) at a constant flow velocity. Accordingly, when the pulses (T+$\Delta$T) (-$E_1$) are inputted, inverted pulses (T+$\Delta$T) are outputted by the integrator and integrated. Namely, the integrator circuit becomes a charging circuit and its output voltage proportionally increases as the number of the input pulses (T+$\Delta$T) increases.

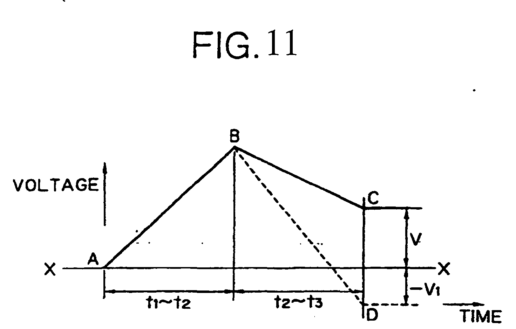

Fig. 11 is a graph showing a voltage-to-time characteristic of voltage to be charged and discharged for the periods between $t_1$ and $t_2$ and between $t_2$ and $t_3$, respectively, of the time chart shown in Fig. 10. During the charging period between $t_1$ and $t_2$, the integrator circuit is charged with a voltage which, as the number of input pulses (T+$\Delta$T) increases, increases proportionately according to a straight line AB from point A to point B.

During the period between $t_2$ and $t_3$, the gate driving voltage of the switch $SW_1$ is held as a low-level signal making the contact 44 be opened but the contact 45 is held as closed (ON) by a high-level signal from the inverter 46, thereby only pulses (T-$\Delta$T) of input voltage (+$E_2$) enter into the integrator through the terminal 43. At this time, the integrator becomes a discharging circuit which is discharged by an inverted output of pulses (T-$\Delta$T). The voltage by which the integrator is charged to the point B by pulses (T+$\Delta$T) is reduced with time by the voltage corresponding to the number (N) of pulses (T-$\Delta$T). Since the pulse (T+$\Delta$T) is wider than the pulse (T-$\Delta$T), the integrator (charging/discharging circuit) outputs a voltage V corresponding to the value determined according to the equation (2): N(T+$\Delta$T) - N(T-$\Delta$T) = 2N$\Delta$T.

As shown in Fig. 10-(e), the period between $t_1$ and $t_3$ is a measuring period for outputting an analog output voltage V proportional to 2N$\Delta$T. The output voltage V is held by the voltage holding circuit 49 and converted into a digital value by the A/D-converter circuit 50. The CPU 51 reads the converted digital signal and determined the mass flowrate. It is needed to provide a time for calculating the mass flowrate and a time for preparing the subsequent measuring cycle by discharging a charge on the integrating capacitor C, which corresponds to the voltage V.

The time duration $t_3$ - $t_4$ for outputting the voltage V (time $t_3$) and inputting a subsequent train of N pulses ($t_3$ - $t_4$) is a period including the above-mentioned operating period $T_c$ ($t_3$ - $t_{31}$) of the CPU 51 and the preparing period $T_D$ ($t_{31}$ - $t_4$) for discharging the feedback capacitor C for preparation for next measuring cycle. This period is given the same time duration as that allocated to the period between $t_1$ and $t_2$ and the period between $t_2$ and $t_3$. Consequently, one measuring cycle is a period corresponding to the period between $t_1$ and $t_4$ for inputting the number (3N) of pulses.

The discharging time of the feedback capacitor C is given by a high-level signal of a voltage pulse from the switch $SW_2$. The high-level signal is raised by an operation end signal of the CPU 51 and is trailed by a signal generated by the switch $SW_1$ at the time $t_4$ when one measuring cycle is finished. A next measuring cycle is a period corresponding to a time for inputting 3N input pulses from the high-level signal trailing time $t_4$. A subsequent measuring cycle starting from the time $t_4$ and corresponding to a period for inputting 3N pulses and the preceding measuring cycle of the above-mentioned time period between $t_1$ and $t_4$ are different from each other by the polarity of the gate driving voltage of the switch $SW_1$, i.e., a high-level signal is given for the measuring cycle period between $t_1$ and $t_4$ whilst a low-level signal is given for the subsequent measuring cycle period between $t_4$ and $t_7$ (not shown).

For this reason, in the subsequent measuring cycle, the first duration $t_4$ - $t_5$ is to charge the integrating circuit with a negative voltage by an inverted output of N pieces of pulses (T-$\Delta$T) having a constant crest value (+$E_2$) and the succeeding duration $t_5$ - $t_8$ is to discharge the integrating circuit with positive voltage by an inverted output of N pieces of pulses (T+$\Delta$T) having a constant crest value (-$E_1$). Consequently, the output voltage V is the same as that of the preceding measuring cycle from $t_1$ to $t_4$.

A voltage V = 2N$\Delta$T is outputted by the integrator each at the time $t_3$ of the preceding measuring cycle and the time $t_6$ of the succeeding measuring cycle and held in the voltage holding circuit. The held analog voltage is inputted into the A/D-converter circuit 10 whereby it is converted into a digital signal proportional to the analog voltage and outputted. The digital signal is then transferred into the CPU 51 which carries out a mathematical operation on the received digital data to obtain a mass flowrate proportional to the voltage V. The calculation result is outputted from the CPU 51 through the terminal 52. As described above, N pulses (T+$\Delta$T) and N pulses (T-$\Delta$T) are processed through charging and discharging operations realized by switching the contacts 4 and 5 with the gate driving voltage of the switch $SW_1$. A mass flowrate signal with a twice-increased (2N) sensitivity is thus outputted.

The output voltage V is an analog voltage which is usually outputted through an operational amplifier (OP-Amp). However, if the output voltage V has a small value close to zero, the operational amplifier may enter into an unstable working range in which measurement may be influenced by a zero-point drift. If a crest value (-$E_1$) of a pulse (T+$\Delta$T) is, for example, equal to a crest value (+$E_2$) of a pulse (T-$\Delta$T), i.e., $|E_1| = |E_2|$, the output voltage of the operational amplifier is zero with no flow of a measurable fluid (i.e., at $\Delta$T = 0). The amplifier may unstably work with an influence of a zero-point drift. A stable range of the output voltage V to be measured with no zero-level voltage is obtained by selecting a relation ($|E_x| > |E_2|$).

To obtain a negative voltage range of the output voltage V, in which no zero-voltage is included, it is necessary to select a value n (n > 1) in such a way that multiplying the crest value of a pulse (T-$\Delta$T) by the value "n" may make the output voltage be negative when no flow exists. In Fig. 11, a pulse (T-$\Delta$T) of thus selected voltage (+$nE_2$) is illustrated by a dotted line, which can make a measured voltage be negative in the negative voltage range (-$V_1$) indicated by a dotted line (Fig. 11).

As mentioned above, the mass flowmeter converter shown in Fig. 9 can determine a time difference signal 2N$\Delta$T which represents a multiplied by a factor 2N residue of subtraction of N pieces of pulses (T-$\Delta$T) from N pieces of pulses (T+$\Delta$T). This feature enables the mass flowmeter to measure a mass flow at a high sensitivity and a high accuracy by only selecting a suitable N value without using a special clock oscillator.

## Claims

1. A mass flowmeter converter for use in a mass flowmeter, said mass flowmeter being adapted to detect a Coriolis force acting on a flow tube being alternatingly driven with a constant frequency about its supporting point as a time difference ($\Delta$T) between one of paired displacement signals detected at symmetrically opposed positions and a given time (T), said mass flowmeter converter comprising:

   a first input terminal (1) for inputting a first displacement signal as leading pulses having a constant crest value and a first pulse width (T+$\Delta$T);

   a second input terminal (2) for inputting a second displacement signal as lagging pulses having a constant crest value and a second pulse width (T-$\Delta$T);

   **characterized by**
   a gate circuit (3, 7, 8) having a closed and an open state, said gate circuit in said open state connecting said first input terminal (1) to one of a first charging and discharging circuit (12, 14, $C_1$, $R_1$) and a second charging and discharging circuit (13, 15, $C_2$, $R_2$) and connecting said second input terminal (2) to the other one of said first and second charging and discharging circuits;

said gate circuit (3, 7, 8) being adapted to be opened and closed at a specified interval to simultaneously input N > 1 pieces of said leading pulses into one of said first (12, 14, $C_1$, $R_1$) and second (13, 15, $R_2$, $C_2$) charging and discharging circuits and N pieces of said lagging pulses into the other one of said first and second charging and discharging circuits, said first and second charging and discharging circuits being charged by said leading pulses and said lagging pulses;

means (4, 5, 9, 10) for connecting said first (12, 14, $C_1$, $R_1$) and second (13, 15, $C_2$, $R_2$) charging and discharging circuits to a reference voltage source (11) when said gate circuit changes from said open state to said closed state, said first and second charging and discharging circuits being discharged by said reference voltage source;

a first zero-crossing detecting portion (16) for detecting a zero-crossing of a discharge voltage of said first charging and discharging circuit (12; 14, $C_1$, $R_1$) as a first zero-crossing time signal;

a second zero-crossing detecting portion (17) for detecting a zero-crossing of a discharge voltage of said second charging and discharging circuit (13, 15, $C_2$, $R_2$) as a second zero-crossing time signal;

a central processing unit (18) for converting a detected zero-crossing time difference between said zero-crossing time signals into a signal representative of a multiple ($2N\Delta T$) of a difference between said first pulse width and said second pulse width and for outputting a mass flowrate proportional to said difference.

2. A mass flowmeter converter as defined in claim 1, further comprising an input pulse switching circuit (20, 21, 22, 23, 24, 25, 26) for switching an input of the first charging and discharging circuit from a leading pulse to a lagging pulse and for switching an input of the second charging and discharging circuit from a lagging pulse to a leading pulse; and aged change correcting means for correcting a measured mass flowrate according to a deviation of a zero-crossing time difference between a first zero-crossing time obtained by inputting a leading pulse into the first charging and discharging circuit and a second zero-crossing time obtained by inputting a lagging pulse into the second charging and discharging circuit from a zero-crossing time difference between a first zero-crossing time obtained by inputting a lagging pulse into the first charging and discharging circuit and a second zero-crossing time obtained by inputting a leading pulse into the second charging and discharging circuit,

3. A mass flowmeter converter as in claim 1 further comprising a switching circuit for detecting said first and second zero-crossings, determining a time till starting a subsequent charging/discharging as one measuring cycle, alternately switching the leading pulses ($T+\Delta T$) and the lagging pulses ($T-\Delta T$) to be inputted into the first charging and discharging circuit (12, 14, $C_1$, $R_1$) and the second charging and discharging circuit (13, 15, $C_2$, $R_2$) for each measuring cycle, adding respective zero-crossing time differences, detected by the first zero-crossing detecting circuit (12, 14, $C_1$, $R_1$) and the second zero-crossing detecting circuit (13, 15, $C_2$, $R_2$) and switched by the switching circuit, for each two successive measuring cycles.

4. A mass flowmeter converter for use in a mass flowmeter, said mass flowmeter being adapted to detect a Coriolis force acting on a flow tube being alternatingly driven with a constant frequency about its supporting point as a time difference ($\Delta T$) between one of paired displacement signals detected at symmetrically opposed positions and a given time (T), said mass flowmeter converter comprising:

a first input terminal (42) for inputting a first displacement signal as first pulses having a constant first crest value and a first pulse width ($T+\Delta T$);

a second input terminal (43) for inputting a second displacement signal as second pulses having a constant second crest value and a second pulse width ($T-\Delta T$);

**characterized by**
a switchable gate circuit (41, 44, 46) to alternately connect a charging and discharging circuit (47, 48) to said first input terminal (42) and to said second input terminal (43), said charging and discharging circuit (47, 48) alternately obtaining N > 1 pieces of said first pulses and N pieces of said second pulses;

said charging and discharging circuit (47, 48) comprising means to successively charge said first pulses to a charged voltage and to discharge said second pulses from said charged voltage;

said charging and discharging circuit further comprising means to output a reduced output voltage corresponding to said charged voltage from which said second pulses have been discharged;

a voltage holding circuit (49) for holding said reduced output voltage;

a central processing unit (51) for determining a mass flowrate proportional to said held voltage.

5. A mass flowmeter comprising:

a flow tube supported at both ends on supporting members;

driving means (102) disposed at a center of said flow tube for oscillating said flow tube at a constant frequency;

a pair of detecting coils (103, 104) arranged symmetrically on opposite sides of said driving means (102) on said flow tube; and

a drive circuit (101) for providing said constant frequency;

**characterized by**
a mass flowmeter converter as defined in claim 1 or claim 4.


**Patentansprüche**

1. Massenströmungsmesswandler zum Einsatz in einem Massenströmungsmesser, wobei der Massenströmungsmesser so eingerichtet ist, dass er eine Coriolis-Kraft, die auf eine Strömungsröhre wirkt, die mit einer konstanten Frequenz abwechselnd um ihren Lagerungspunkt herum angetrieben wird, als eine Zeitdifferenz ($\Delta T$) zwischen einem von paarigen Verschiebungssignalen, die an einander symmetrisch gegenüberliegenden Positionen erfasst werden, und einer vorgegebenen Zeit (T) erfasst, wobei der Massenströmungsmesswandler umfasst:

einen ersten Eingangsanschluss (1) zum Eingeben eines ersten Verschiebungssignals als voreilende Impulse mit einem konstanten Scheitelwert und einer ersten Impulsbreite ($T+\Delta T$);

einen zweiten Eingangsanschluss (2) zum Eingeben eines zweiten Verschiebungssignals als nacheilende Impulse mit einem konstanten Scheitelwert und einer zweiten Impulsbreite ($T-\Delta T$);

**gekennzeichnet durch:**

eine Gatterschaltung (3, 7, 8), die einen geschlossenen und einen offenen Zustand hat, wobei die Gatterschaltung in dem offenen Zustand den ersten Eingangsanschluss (1) mit einer ersten Lade-und-Entlade-Schaltung (12, 14, $C_1$, $R_1$) oder einer zweiten Lade-und-Entlade-Schaltung (13, 15, $C_2$, $R_2$) verbindet und den zweiten Eingangsanschluss (2) mit der anderen, das heißt der ersten oder der zweiten Lade-und-Entlade-Schaltung, verbindet;

wobei die Gatterschaltung (3, 7, 8) so eingerichtet ist, dass sie in einem vorgegebenen Intervall geöffnet und geschlossen wird, um simultan N > 1 Teile der voreilenden Impulse in die erste (12, 14, $C_1$, $R_1$) oder die zweite (13, 15, $R_2$, $C_2$) Lade-und-Entlade-Schaltung und N Teile der nacheilenden Impulse in die andere, d.h. die erste oder die zweite Lade-und-Entlade-Schaltung, einzugeben, wobei die erste und die zweite Lade-und-Entlade-Schaltung **durch** die voreilenden Impulse und die nacheilenden Impulse geladen werden;
eine Einrichtung (4, 5, 9, 10), die die erste (12, 14, $C_1$, $R_1$) und die zweite (13, 15, $C_2$, $R_2$) Lade-und-Entlade-Schaltung mit einer Bezugsspannungsquelle (11) verbindet, wenn die Gatterschaltung von dem offenen Zustand in den geschlossenen Zustand übergeht, wobei die erste und die zweite Lade-und-Entlade-Schaltung **durch** die Bezugsspannungsquelle entladen werden;
einen ersten Nulldurchgangs-Erfassungsabschnitt (16), der einen Nulldurchgang einer Entladungsspannung der ersten Lade-und-Entlade-Schaltung (12, 14, $C_1$, $R_1$) als ein erstes Nulldurchgangs-Zeitsignal erfasst;
einen zweiten Nulldurchgangs-Erfassungsabschnitt (17), der einen Nulldurchgang einer Entladungsspannung der zweiten Lade-und-Entlade-Schaltung (13, 15, $C_2$, $R_2$) als ein zweites Nulldurchgangs-Zeitsignal erfasst;
eine zentrale Verarbeitungseinheit (18), die eine erfasste Nulldurchgangs-Zeitdifferenz zwischen den Nulldurchgangs-Zeitsignalen in ein Signal umwandelt, das ein Vielfaches ($2N\Delta T$) einer Differenz zwischen der ersten Impulsbreite und der zweiten Impulsbreite darstellt, und eine Massenströmung proportional zu der Differenz ausgibt.

2. Massenströmungsmesswandler nach Anspruch 1, der des Weiteren eine Eingangsimpuls-Umstellschaltung (20, 21, 22, 23, 24, 25, 26), die einen Eingang der ersten Lade-und-Entlade-Schaltung von einem voreilenden Impuls zu einem nacheilenden Impuls umstellt und einen Eingang der zweiten Lade-und-Entlade-Schaltung von einem nacheilenden Impuls zu einem voreilenden Impuls umstellt; und eine Alterungsänderungs-Korrektureinrichtung umfasst, die eine gemessene Massenströmung entsprechend einer Abweichung einer Nulldurchgangs-Zeitdifferenz zwischen einer ersten Nulldurchgangszeit, die ermittelt wird, indem ein voreilender Impuls in die erste Lade-und-Entlade-Schaltung eingegeben wird, und einer zweiten Nulldurchgangszeit, die ermittelt wird, indem ein nacheilender Impuls in die zweite Lade-und-Entlade-Schaltung eingegeben wird, von einer Nulldurchgangs-Zeitdifferenz zwischen einer ersten Nulldurchgangszeit, die ermittelt wird, indem ein nacheilender Impuls in die erste Lade-und-Entlade-Schaltung eingegeben wird, und einer zweiten Nulldurchgangszeit, die ermittelt wird, indem ein voreilender Impuls in die zweite Lade-und-Entlade-Schaltung eingegeben wird, korrigiert.

3. Massenströmungsmesswandler nach Anspruch 1, der des Weiteren eine Umstellschaltung umfasst, die den ersten und den zweiten Nulldurchgang erfasst, eine Zeit bis zum Beginn eines folgenden Ladens/Entladens als einen Messzyklus bestimmt, abwechselnd die voreilenden Impulse $(T+\Delta T)$ und die nacheilenden Impulse $(T-\Delta T)$ zum Eingeben in die erste Lade-und-Entlade-Schaltung $(12, 14, C_1, R_1)$ und die zweite Lade-und-Entlade-Schaltung $(13, 15, C_2, R_2)$ für jeden Messzyklus umstellt, entsprechende Nulldurchgangs-Zeitdifferenzen, die von der ersten Nulldurchgangs-Erfassungsschaltung $(12, 14, C_1, R_1)$ und der zweiten Nulldurchgangs-Erfassungsschaltung $(13, 15, C_2, R_2)$ erfasst werden und durch die Umstellschaltung umgestellt werden, für jeweils zwei aufeinander folgende Messzyklen hinzufügt.

4. Massenströmungsmesswandler zum Einsatz in einem Massenströmungsmesser, wobei der Massenströmungsmesser so eingerichtet ist, dass er eine Coriolis-Kraft, die auf eine Strömungsröhre wirkt, die mit einer konstanten Frequenz abwechselnd um ihren Lagerungspunkt angetrieben wird, als eine Zeitdifferenz $(\Delta T)$ zwischen einem von paarigen Verschiebungssignalen, die an einander symmetrisch gegenüberliegenden Positionen erfasst werden, und einer vorgegebenen Zeit (T) erfasst, wobei der Massenströmungsmesswandler umfasst:

    einen ersten Eingangsanschluss (42) zum Eingeben eines ersten Verschiebungssignals als erste Impulse mit einem konstanten Scheitelwert und einer ersten Impulsbreite $(T+\Delta T)$;

    einen zweiten Eingangsanschluss (43) zum Eingeben eines zweiten Verschiebungssignals als zweite Impulse mit einem konstanten zweiten Scheitelwert und einer zweiten Impulsbreite $(T-\Delta T)$;

    **gekennzeichnet durch**:
    eine umstellbare Gatterschaltung (41, 44, 46), die abwechselnd eine Lade-und-Entlade-Schaltung (47, 48) mit dem ersten Eingangsanschluss (42) und dem zweiten Eingangsanschluss (43) verbindet, wobei die Lade-und-Entlade-Schaltung (47, 48) abwechselnd N > 1 Teile der ersten Impulse und N Teile der zweiten Impulse erhält;
    wobei die Lade-und-Entlade-Schaltung (47, 48) eine Einrichtung umfasst, die aufeinanderfolgend die ersten Impulse auf eine Ladungsspannung lädt und die zweiten Impulse von der Ladungsspannung entlädt;
    die Lade-und-Entlade-Schaltung des Weiteren eine Einrichtung umfasst, die eine verringerte Ausgangsspannung ausgibt, die der Ladungsspannung entspricht, von der die zweiten Impulse entladen worden sind;
    eine Spannungshalteschaltung (49), die die verringerte Ausgangsspannung hält;
    eine zentrale Verarbeitungseinheit (51), die eine Massenströmung proportional zu der gehaltenen Spannung bestimmt.

5. Massenströmungsmesser, der umfasst:

    eine Strömungsröhre, die an beiden Enden an Lagerungselementen gelagert ist;

    eine Antriebseinrichtung (102), die in einer Mitte der Strömungsröhre angeordnet ist, um die Strömungsröhre mit einer konstanten Frequenz in Schwingung zu versetzen;

    ein Paar Erfassungsspulen (103, 104), die symmetrisch an einander gegenüberliegenden Seiten der Antriebseinrichtung (102) an der Strömungsröhre angeordnet sind; und

    eine Antriebsschaltung (101), die die konstante Frequenz erzeugt;

    **gekennzeichnet durch:**

    einen Massenströmungsmesswandler nach Anspruch 1 oder Anspruch 4.

**Revendications**

1. Convertisseur pour débitmètre massique que l'on utilise dans un débitmètre massique, lequel débitmètre massique est conçu pour détecter une force de Coriolis agissant sur un tube d'écoulement qui est actionné par alternance avec une fréquence constante autour de son point de support selon une différence de temps ($\Delta T$) entre l'un ou l'autre de signaux de déplacement appariés détectés en des positions symétriquement opposées et un temps donné (T), lequel convertisseur pour débitmètre massique comprend :

   - une première borne d'entrée (1) permettant d'entrer un premier signal de déplacement sous forme d'impulsions avant ayant une valeur de crête constante et une première largeur d'impulsion ($T + \Delta T$) ; et

   - une seconde borne d'entrée (2) permettant d'entrer un second signal de déplacement sous forme d'impulsions arrière ayant une valeur de crête constante et une seconde largeur d'impulsion ($T - \Delta T$) ;

   **caractérisé par** :

   - un circuit de porte (3, 7, 8) possédant un état ouvert et un état fermé, lequel circuit de porte, à l'état ouvert, connecte ladite première borne d'entrée (1) à un circuit choisi parmi un premier circuit de chargement et de déchargement (12, 14, $C_1$, $R_1$) et un second circuit de chargement et de déchargement (13, 15, $C_2$, $R_2$), et connecte la seconde borne d'entrée (2) à l'autre desdits premier et second circuits de chargement et de déchargement ;

   - ledit circuit de porte (3, 7, 8) étant conçu pour être ouvert et fermé à un intervalle spécifié afin d'entrer simultanément N > 1 unités desdites impulsions avant dans l'un desdits premier (12, 14, $C_1$, $R_1$) et second (13, 15, $C_2$, $R_2$) circuits de chargement et de déchargement et N unités desdites impulsions arrière dans l'autre desdits premier et second circuits de chargement et de déchargement, lesdits premier et second circuits de chargement et de déchargement étant chargés par lesdites impulsions avant et lesdites impulsions arrière ;

   - des moyens (4, 5, 9, 10) permettant de connecter lesdits premier (12, 14, $C_1$, $R_1$) et second (13, 15, $C_2$, $R_2$) circuits de chargement et de déchargement à une source de tension de référence (11) lorsque ledit circuit de porte passe de l'état ouvert à l'état fermé, lesdits premier et second circuits de chargement et de déchargement étant déchargés par ladite source de tension de référence ;

   - une première partie de détection de passage à zéro (16) permettant de détecter le passage à zéro d'une tension de décharge dudit premier circuit de chargement et de déchargement (12, 14, $C_1$, $R_1$) sous forme d'un premier signal du temps de passage à zéro ;

   - une seconde partie de détection de passage à zéro (17) permettant de détecter le passage à zéro d'une tension de décharge dudit second circuit de chargement et de déchargement (13, 15, $C_2$, $R_2$) sous forme d'un second signal du temps de passage à zéro ;

   - une unité centrale de traitement (18) permettant de transformer une différence de temps de passage à zéro détectée entre lesdits signaux de temps de passage à zéro, en un signal représentant un multiple ($2N\Delta T$) d'une différence entre ladite première largeur d'impulsion et ladite seconde largeur d'impulsion, et de fournir un débit massique proportionnel à ladite différence.

2. Convertisseur pour débitmètre massique tel que défini dans la revendication 1, comprenant en outre : un circuit de commutation d'impulsions d'entrée (20, 21, 22, 23, 24, 25, 26) permettant de commuter une entrée du premier circuit de chargement et de déchargement depuis une impulsion avant vers une impulsion arrière, et de commuter une entrée du second circuit de chargement et de déchargement depuis une impulsion arrière vers une impulsion avant ; et un moyen de correction de changement passé permettant de corriger un débit massique mesuré en fonction d'un écart d'une différence du temps de passage à zéro entre un premier temps de passage à zéro obtenu en entrant une impulsion avant dans le premier circuit de chargement et de déchargement, et un second temps de passage à zéro obtenu en entrant une impulsion arrière dans le second circuit de chargement et de déchargement, ceci à partir d'une différence de temps de passage à zéro entre un premier temps de passage à zéro obtenu en entrant une impulsion arrière dans le premier circuit de chargement et de déchargement, et un second temps de passage à zéro obtenu en entrant une impulsion avant dans le second circuit de chargement et de déchargement.

3. Convertisseur pour débitmètre massique selon la revendication 1, comprenant en outre un circuit de commutation permettant de détecter lesdits premier et second passages à zéro, de déterminer un temps avant de démarrer un chargement/déchargement suivant servant comme un cycle de mesure, de commuter alternativement les impulsions avant $(T + \Delta T)$ et les impulsions arrière $(T - \Delta T)$ devant être entrées dans le premier circuit de chargement et de déchargement $(12, 14, C_1, R_1)$ et dans le second circuit de chargement et de déchargement $(13, 15, C_2, R_2)$ pour chaque cycle de mesure, d'ajouter les différences de temps de passage à zéro respectives détectées par le premier circuit de détection de passage à zéro $(12, 14, C_1, R_1)$ et le second circuit de détection de passage à zéro $(13, 15, C_2, R_2)$ et commutées par le circuit de commutation tous les deux cycles de mesure successifs.

4. Convertisseur pour débitmètre massique que l'on utilise dans un débitmètre massique, lequel débitmètre massique est conçu pour détecter une force de Coriolis agissant sur un tube d'écoulement qui est actionné par alternance avec une fréquence constante autour de son point de support selon une différence de temps $(\Delta T)$ entre l'un ou l'autre de signaux de déplacement appariés détectés en des positions symétriquement opposées et un temps donné $(T)$, lequel convertisseur pour débitmètre massique comprend :

- une première borne d'entrée (42) permettant d'entrer un premier signal de déplacement sous forme de premières impulsions ayant une première valeur de crête constante et une première largeur d'impulsion $(T + \Delta T)$ ; et

- une seconde borne d'entrée (43) permettant d'entrer un second signal de déplacement sous forme de secondes impulsions ayant une seconde valeur de crête constante et une seconde largeur d'impulsion $(T - \Delta T)$ ;

**caractérisé par** :

- un circuit de porte commutable (41, 44, 46) permettant de connecter alternativement un circuit de chargement et de déchargement (47, 48) à ladite première borne d'entrée (42) et à ladite seconde borne d'entrée (43), lequel circuit de chargement et de déchargement (47, 48) permet d'obtenir alternativement $N > 1$ unités desdites premières impulsions et N unités desdites secondes impulsions ;

- ledit circuit de chargement et de déchargement (47, 48) comprenant des moyens permettant de charger successivement lesdites premières impulsions vers une tension chargée et de décharger lesdites secondes impulsions depuis une tension chargée ;

- lequel circuit de chargement et de déchargement comprend en outre des moyens permettant d'émettre une tension de sortie réduite correspondant à ladite tension chargée depuis laquelle lesdites secondes impulsions ont été déchargées ;

- un circuit de maintien de tension (49) permettant de maintenir ladite tension de sortie réduite ; et

- une unité centrale de traitement (51) permettant de déterminer un débit massique proportionnel à ladite tension maintenue.

5. Débitmètre massique comprenant :

- un tube d'écoulement supporté à ses deux extrémités sur des éléments de support ;

- un moyen d'entraînement (102) disposé au centre dudit tube d'écoulement afin de faire osciller ledit tube d'écoulement à une fréquence constante ;

- une paire de bobines de détection (103, 104) disposées symétriquement sur les côtés opposés dudit moyen d'entraînement (102) sur ledit tube d'écoulement ; et

- un circuit d'entraînement (101) permettant de fournir ladite fréquence constante ;

**caractérisé par** un convertisseur pour débitmètre de masse tel que défini dans la revendication 1 ou la revendication 4.

# FIG.1
## ( PRIOR ART )

101
DRIVING CIRCUIT

102

103

P

106

105
PHASE DETECTION CIRCUIT

108
CPU

104

# FIG.3
## ( PRIOR ART )

111 CLOCK

112 $T+\Delta T$

113 $T-\Delta T$

114 COUNTER

115 CPU

116

15

# FIG.2
## ( PRIOR ART )

(a)

(b)

(c)    (T−ΔT)

(d)    (T+ΔT)

EP 0 759 541 B1

# FIG.4

EP 0 759 541 B1

# FIG.5

FIG.6

# FIG.7A

# FIG.7B

# FIG.8

# FIG. 9

# FIG. 10

# FIG.11